# EUROPÄISCHE PATENTSCHRIFT

(11) **EP 1 792 707 B1**
(45) Veröffentlichungstag und Bekanntmachung des Hinweises auf die Patenterteilung: **24.07.2013**
(21) Anmeldenummer: 06024428.2
(22) Anmeldetag: 24.11.2006
(51) Int. Cl.: B29C 65/60, B29C 65/42, B23B 51/08, B29C 65/64, B23B 41/00, F16B 5/04

(54) **Verfahren und Vorrichtung zum Verbinden eines Kunststoff-Werkstücks mit einem weiteren Werkstück**
Process and device for joining a plastic workpiece to another workpiece
Procédé et dispositif pour connecter une pièce en matière plastique à une autre pièce

(30) Priorität: 02.12.2005 DE 102005057891
(43) Veröffentlichungstag der Anmeldung: 06.06.2007
(73) Patentinhaber: Helmholtz-Zentrum Geesthacht Zentrum für Material- und Küstenforschung GmbH, 21502 Geesthacht (DE)
(72) Erfinder: de Traglia Amancio Filho, Sergio, 21039 Börnsen (DE); dos Santos, Jorge F., 21395 Tespe-Avendorf (DE); Beyer, Matthias, 06484 Quedlinburg (DE)
(74) Vertreter: UEXKÜLL & STOLBERG

(56) Entgegenhaltungen:
- EP-A- 0 340 094
- DE-A1-102004 038 084
- FR-A- 2 071 122
- GB-A- 2 278 571
- JP-A- 59 201 817
- JP-A- 62 207 629
- US-A- 3 122 465

## Beschreibung

Die vorliegende Erfindung betrifft ein Verfahren zum Verbinden eines Kunststoff-Werkstücks mit einem weiteren Werkstück sowie eine Vorrichtung zur Durchführung des Verfahrens.

In der Automobil-, Schiffbau- und Bauindustrie werden immer häufiger sogenannte Multi-Material-Strukturen eingesetzt, die einerseits Kunststoffe und andererseits Metalle umfassen, wobei die beiden Materialbestandteile kraftschlüssig miteinander verbunden sind. Auf diese Weise werden die Eigenschaften beider Materialien kombiniert, um so einen Verbundwerkstoff mit verbesserten Eigenschaften zu erhalten. Um die Kunststoffe und Metalle miteinander zu verbinden, können zunächst mechanische Verbindungen und Klebeverbindungen eingesetzt werden.

Bei den mechanischen Verbindungen kommen insbesondere Niet- oder Clinch-Verbindungen in Frage, die jedoch die folgenden Nachteile aufweisen. Zum einen treten in den Werkstücken hohe Spannungskonzentrationen auf. Zum anderen kann es zu einem späteren Lockern der Verbindung infolge von Kriechen, Feuchtigkeit und Relaxation kommen. Schließlich ist an mechanischen Verbindungen nachteilhaft, dass deren äußeres Erscheinungsbild einen Einsatz im Sichtbereich ausschließt bzw. es erforderlich ist, diese Bereiche nachträglich zu bearbeiten.

Klebeverbindungen weisen den Nachteil auf, dass die Festigkeit der Verbindung nur schwer abgeschätzt werden kann. Ferner ergibt sich das Problem, dass bedingt durch die Aushärtzeit eines Klebers die Taktzeiten für das Erstellen einer Klebeverbindung vergleichsweise lang sind. Außerdem können beim Aushärten Lösungsmittel freigesetzt werden, sodass eine Emissionsüberwachung beim Herstellen der Klebeverbindung erforderlich werden kann. Wenn für das Aushärten außerdem erhöhte Temperaturen erforderlich sind, können die Werkstücke in Mitleidenschaft gezogen werden. Schließlich kann es für eine zuverlässige Klebeverbindung erforderlich sein, die zu verbindenden Oberflächen vorzubehandeln, was einen zusätzlichen Aufwand bedeutet.

Neben den mechanischen Verbindungen und den Klebeverbindungen sind noch Schweißverfahren bekannt, um Multi-Material-Strukturen herzustellen. Die dafür angewandten Schweißverfahren umfassen Ultraschallschweißen, Widerstandsschweißen, Vibrationsschweißen, Induktionsschweißen und Infrarotschweißen. Hierbei treten jedoch die folgenden prinzipiellen Nachteile zutage. Zum einen ist auch hier eine Oberflächenvorbehandlung erforderlich und zum anderen ist wegen des vergleichsweise geringen Wirkungsgrades der Energieverbrauch zum Erstellen einer derartigen Schweißverbindung relativ hoch. Außerdem weisen die so hergestellten Verbindungen eine nur geringe Zuverlässigkeit auf, sodass sie in sensiblen Bereichen nicht eingesetzt werden können.

In der Zwischenzeit sind sogenannte Hybrid-Verbindungstechniken entwickelt worden, bei denen versucht wird, durch die Kombination von zwei oder mehr konventionellen Verbindungsmethoden eine Verbesserung der Verbindungseigenschaften erreichen. Aus der DE 101 49 633 A1 ist dazu das Metall-Kragen-Verbinden bekannt, wobei in das Metallteil zunächst ein Loch gestanzt wird, sodass das Loch anschließend von einem kreisförmigen Metall-"Kragen" umgeben ist. Dieser Kragen wird anschließend in das mit dem Metallteil zu verbindende Kunststoffteil gepresst, sodass danach eine formschlüssige Verbindung vorliegt. Bei diesem Einpressen kann es jedoch zu Haarrissen in dem Kunststoffteil kommen, die wiederum zum Versagen der Verbindung unter Belastung führen können.

Bei einem anderen Hybrid-Verfahren werden ein Metall und ein Kunststoff in der Weise miteinander verbunden, dass der Kunststoff im Rahmen eines Spritzgießprozesses in Hohlräume eingespritzt wird, die zuvor in den Metallteilen ausgebildet worden sind, sodass dadurch eine formschlüssige Verbindung zwischen Kunststoff einerseits und Metall andererseits hergestellt wird. Bedingt durch die aufwendige Vorbearbeitung der Metallteile ist ein derartiges Verfahren jedoch sehr zeitaufwendig und benötigt lange Taktzeiten.

Aus der GB 2 278 571 A ist ein Verfahren zum Verbinden zweier Werkstücke bekannt, wobei zunächst in beiden Werkstücken eine Ausnehmung ausgebildet wird und die Werkstücke dann aneinander angelegt werden, so dass die Ausnehmungen miteinander fluchten. Anschließend wird ein Verbindungselement oberhalb der Ausnehmungen auf der Oberfläche eines der Werkstücke angeordnet und aufgeheizt, so dass es plastisch verformbar wird. Schließlich wird das plastisch verformbare Material in die Ausnehmungen gepresst.

Die US 3,122,465 offenbart ein Verfahren zum Verbinden zweier Schichten eines Textilmaterials, wobei einzelne Elemente eines thermoplastischen Materials in das Textilmaterial eingepresst und anschließend aufgeschmolzen werden. Dabei ist es auch vorgesehen, das vor dem Einbringen der thermoplastischen Elemente eine Perforation in dem Gewebe hergestellt wird, wobei die Elemente dann in die entsprechenden Löcher eingebracht werden können.

Die JP 59 201 817 A beschreibt ein Verfahren, bei dem im Überlappbereich zweier flächiger Werkstücke zunächst ein Fasermaterial aufgebracht und anschließend dieser Bereich von Nadeln durchstoßen wird, so dass einzelne Fasern durch beide Werkstücke hindurch treten. Anschließend wird die von der Fasermaterialseite abgewandte Fläche der Werkstücke erhitzt, um die durchgestochenen Fasern miteinander zu verschweißen.

Aus der EP 0 340 094 A2 ist ein Verfahren zum Verbinden von Kunststoff- und Metallwerkstücken bekannt, wobei zunächst eine Öffnung in das Metallwerkstück eingebracht wird, dieses dann mit der Öffnung benachbart zu einem Verbindungselement an einem Kunststoff-Werkstück angelegt wird und schließlich das Verbindungselement aufgeheizt und in die Öffnung eingepresst wird.

Die JP 62 207 629 A beschreibt ebenfalls ein Verfahren zum Verbinden eines Metallwerkstücks mit einem Kunststoffbauteil, an dem einstückig ein Verbindungselement angeformt wird, dass später aufgeschmolzen wird. Dabei dringt das aufgeschmolzene Material in eine Bohrung ein, die bereits vor dem Anlegen des Metallwerkstücks an das Kunststoffwerkstück eingebracht worden ist. Damit offenbart auch diese Veröffentlichung nicht, die Ausnehmung in das Metallwerkstück bzw. das weitere Werkstück erst dann einzubringen, wenn dieses bereits an dem Kunststoffwerkstück anliegt.

Aus der FR 2 071 122 ist ein Verfahren zum Verbinden eines Metall-Scharnierelements mit einem Kunststoff-Brillenbügel bekannt, wobei das Scharnierelement eine Ausnehmung aufweist, die fluchtend mit einem einstückig an dem Bügel angebrachten Verbindungselement angeordnet wird. Anschließend wird das Verbindungselement mittels eines Heizelements aufgeheizt, bis es plastisch verformbar ist. Anschließend wird das Material des Verbindungselements mittels eines Kolbens in die Ausnehmung eingepresst.

Ausgehend vom Stand der Technik liegt der vorliegenden Erfindung daher die Aufgabe zugrunde, ein Verfahren und eine Vorrichtung bereitzustellen, mit denen eine formschlüssige Verbindung zwischen einem Kunststoff-Werkstück und einem weiteren Werkstück in kurzer Zeit und ohne großen vorrichtungsmäßigen Aufwand hergestellt werden kann.

Diese Aufgabe wird zunächst durch ein Verfahren mit den folgenden Schritten gelöst:
- Bereitstellen eines Kunststoff-Werkstücks und eines weiteren Werkstücks,
- Anlegen des weiteren Werkstücks an das Kunststoff-Werkstück,
- Bereitstellen eines Verbindungselements an einer Oberfläche des Kunststoff-Werkstücks, die der Oberfläche gegenüberliegt, an der das weitere Werkstück anliegt,
- Einbringen einer Ausnehmung in das weitere Werkstück, die an der an dem Kunststoff-Werkstück anliegenden Oberfläche vorgesehen ist,
   - wobei die Ausnehmung als eine Bohrung in das weitere Werkstück eingebracht wird und
   - wobei die Bohrung durch das Verbindungselement und das Kunststoff-Werkstück in das weitere Werkstück geführt wird,
- Aufheizen des Verbindungselements, sodass das Material des Verbindungselements plastifiziert wird, und
- Einpressen von plastifiziertem Material in die Ausnehmung.

Bei dem erfindungsgemäßen Verfahren wird ein weiteres Werkstück, was in einer bevorzugten Ausführungsform des Verfahrens als ein Metall-Werkstück ausgebildet sein kann, an ein Kunststoff-Werkstück angelegt. Dabei wird ein Verbindungselement bereitgestellt, wobei das Verbindungselement an einer Oberfläche des Kunststoff-Werkstücks angeordnet wird, die der Oberfläche gegenüberliegt, an der das weitere Werkstück anliegt. Das Verbindungselement ist dabei bevorzugt zylindrisch ausgebildet.

In bevorzugter Weise ist das Verbindungselement bereits an dem Kunststoff-Werkstück ausgebildet, wobei es weiter bevorzugt einstückig mit dem Kunststoff-Werkstück ausgebildet ist, sodass das Verbindungselement zusammen mit dem Kunststoff-Werkstück bereitgestellt wird. Dabei kann das Kunststoff-Werkstück in einer ersten Alternative bereits im Rahmen eines Spritzgießverfahrens die geforderte Form erhalten. In einer zweiten Alternative ist es möglich, dass das Verbindungselement durch Ausfräsen in der gewünschten Weise geformt wird. In beiden Fällen ist sichergestellt, dass das Material des Kunststoff-Werkstücks auch nach Herstellen der Verbindung homogen ist und keine Einschlüsse eines Fremdmaterials insbesondere im Bereich der Verbindung aufweist.

Alternativ dazu ist es auch möglich, dass das Verbindungselement als von dem Kunststoff-Werkstück getrenntes Teil zugeführt wird, sodass es keiner speziellen Bearbeitung des Kunststoff-Werkstücks bedarf, um dieses an das erfindungsgemäße Verfahren anzupassen.

Ferner wird eine Ausnehmung in das weitere Werkstück eingebracht, wobei es sich um eine einfache Bohrung handelt. Darauf folgend wird das Verbindungselement soweit aufgeheizt, dass es plastisch verformbar ist, so dass das plastifizierte Material in die in dem weiteren Werkstück gebildete Ausnehmung gepresst werden kann.

Auf diese Weise wird zum einen eine formschlüssige Verbindung zwischen dem Kunststoff-Werkstück einerseits und dem weiteren Werkstück andererseits gebildet. Zum anderen wird erreicht, dass nach dem Einpressen des Materials des Verbindungslements die Oberfläche des Kunststoff-Werkstücks keine Vorsprünge aufweist, sondern eben ist..

Da die Umformung des Kunststoff-Werkstücks bei erhöhter Temperatur erfolgt, kommt es wenn überhaupt nur zu geringen Spannungen im Bereich der Verbindung.

Mittels des erfindungsgemäßen Verfahrens ist es möglich, aus dem Stand der Technik bekannte punktförmige Verbindungskonfigurationen wie das Nieten oder das Nietkleben zu ersetzen, ohne wesentliche konstruktive Anpassungen an den Werkstücken vornehmen zu müssen. Ein weiterer Vorteil ist darin zu sehen, dass sich das erfindungsgemäße Verfahren leicht, beispielsweise in Verbindung mit einem Roboter, automatisieren lässt.

In einer bevorzugten Ausführungsform kann ein von dem Kunststoff-Werkstück getrenntes Verbindungselement vor dem Einbringen der Ausnehmung an dem Kunststoff-Werkstück angeordnet werden. Außerdem kann das getrennte Verbindungselement entweder aus demselben Material wie das Kunststoff-Werkstück sein oder sich von diesem unterscheiden.

In einer bevorzugten Ausführungsform des Verfahrens wird ein Druck auf das Material, das in die Ausnehmung gepresst ist, aufrechterhalten, bis das Material abgekühlt und damit ausgehärtet ist. Dadurch wird erreicht, dass temperaturbedingte Schrumpfungsprozesse nicht dazu führen, dass sich insbesondere in der Ausnehmung Hohlräume bilden, was sonst dazu führen könnte, dass die Verbindung nicht hinreichend stabil ist.

Ferner wird die Ausnehmung in dem weiteren Werkstück als eine Bohrung ausgeführt, die sich weiter durch das Kunststoff-Werkstück erstreckt. In diesem Fall kann das plastifizierte Material des Verbindungselements durch die Bohrung hindurch in die Ausnehmung in dem weiteren Werkstück gepresst werden, ohne dass ein besonders großer Druck aufgebracht werden muss.

Um nach dem Herstellen der Verbindung auch in Erstreckungsrichtung der Ausnehmung einen Formschluss zwischen den beiden Werkstücken zu erreichen, ist es ferner bevorzugt, wenn die Bohrung als Gewindebohrung ausgebildet ist.

Ferner kann die Ausnehmung als Durchgangsbohrung in dem weiteren Werkstück ausgebildet sein, wobei in weiter bevorzugter Weise der Bereich der Durchgangsbohrung, der an die Oberfläche des weiteren Werkstücks angrenzt, die von dem Kunststoff-Werkstück abgewandt ist, einen gegenüber der restlichen Durchgangsbohrung vergrößerten Durchmesser aufweist. Bei dieser Ausbildung der Ausnehmung wird ein Formschluss in axialer Richtung der Ausnehmung erreicht. Dies ergibt eine hohe Belastbarkeit der erfindungsgemäß hergestellten Verbindung auch in der Richtung, in der die Ausnehmung verläuft.

Gemäß einer weiteren bevorzugten Ausführungsform des Verfahrens wird die an dem Kunststoff-Werkstück anliegende Oberfläche des weiteren Werkstücks aufgeraut oder abgeschliffen. Dadurch wird zum einen die Adhäsion des Kunststoffs an der Oberfläche des weiteren Werkstücks verbessert. Außerdem können gegebenenfalls auf der Oberfläche vorhandene Oxidschichten aufgebrochen werden, um einen eindeutig definierten Ausgangszustand hinsichtlich der Oberfläche zu schaffen. Darüber hinaus können andere Oberflächenbehandlungen durchgeführt werden, die normalerweise zur Erhöhung der Haftung von Klebeverbindungsoberflächen verwendet werden. Hierbei kann es sich um chemisches Ätzen oder Elektronenbestrahlung handeln.

Die obige Aufgabe wird außerdem durch eine Vorrichtung gelöst mit einem Bohrerelement, mit einem ringförmigen Kolben, der das Bohrerelement umgibt und der eine Kolbenfläche aufweist, und mit einem Heizring, der den Kolben umgibt und der eine ringförmige Auflagefläche aufweist, wobei der Heizring beheizbar ist, wobei der Kolben in axialer Richtung des Bohrerelements zwischen einer zurückgezogenen Stellung, in der die Kolbenfläche hinter der Auflagefläche zurücksteht, und einer vorgeschobenen Stellung verschiebbar ist, in der die Kolbenfläche in der Ebene der Auflagefläche verläuft, und wobei das Bohrerelement in seiner axialen Richtung zwischen einer ersten Stellung, in der die Spitze des Bohrerelements in der Ebene der Kolbenfläche angeordnet ist, wenn der Kolben in der zurückgezogenen Stellung ist, und einer zweiten Stellung verschiebbar ist, in der die Spitze des Bohrerelements über die Ebene der Auflagefläche vorsteht.

Wenn sich das Bohrerelement in seiner ersten Stellung und der Kolben sich in seiner zurückgezogenen Stellung befindet, kann die erfindungsgemäße Vorrichtung derart auf ein Kunststoff-Werkstück mit einem darauf angeordneten Verbindungselement gesetzt werden, dass sich Letzteres in der Vertiefung befindet, die von dem Heizring umschlossen ist.

Darauf folgend kann das Bohrerelement, das in bevorzugter Weise rotiert werden kann, in das Kunststoff-Werkstück und das weitere Werkstück abgesenkt werden, sodass die erforderliche Ausnehmung in dem weiteren Werkstück gebildet wird. Anschließend wird das Bohrerelement wieder in seine erste Stellung zurückgezogen, und das Verbindungselement kann über den Heizring soweit aufgeheizt werden, dass es plastisch verformbar ist. Wenn dies erreicht ist, wird der Kolben in seine vorgeschobene Stellung gebracht, sodass das sich in der Vertiefung befindende plastifizierte Material in die Bohrung und damit in die Ausnehmung gepresst wird.

Somit ermöglicht die erfindungsgemäße Vorrichtung, das bereits beschriebene Verfahren in einfacher Weise durchzuführen. Im Übrigen gelten für die erfindungsgemäße Vorrichtung bereits die im Zusammenhang mit dem Verfahren erwähnten Vorteile.

Im Folgenden wird die vorliegende Erfindung anhand einer lediglich bevorzugte Ausführungsbeispiele zeigenden Zeichnung erläutert. In der Zeichnung zeigen
- Fig. 1: einen Längsschnitt einer erfindungsgemäßen Vorrichtung,
- Fig. 2: Querschnittsansichten möglicher Verbindungensanordnungen zwischen einem Kunststoff-Werkstück und einem weiteren Werkstück,
- Fig. 3: die Schritte a) bis c) einer bevorzugten Ausführungsform des erfindungsgemäßen Verfahrens und
- Fig. 4: die Schritte d) und e) der bevorzugten Ausführungsform des Verfahrens.

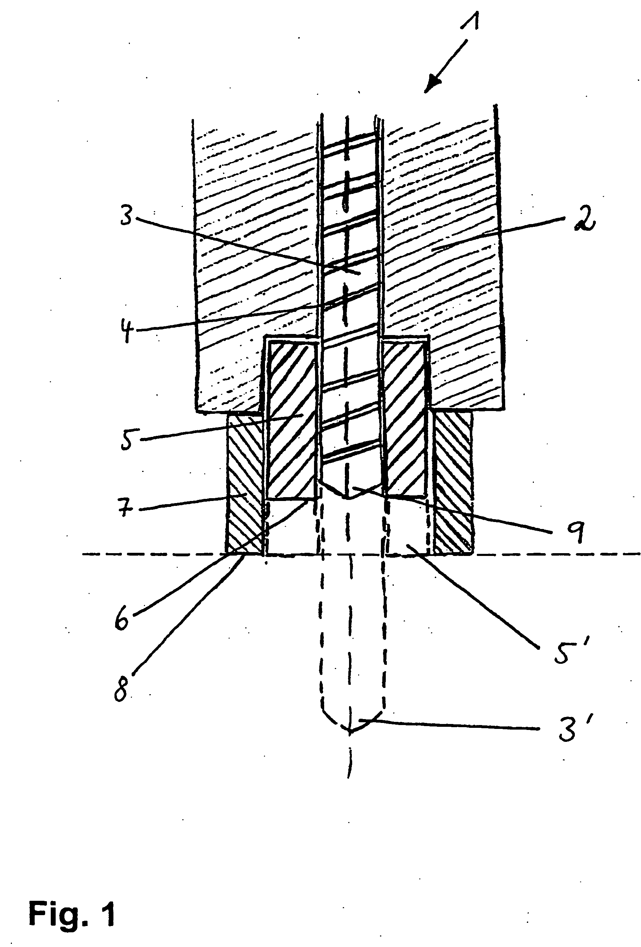

In Fig. 1 ist ein Ausführungsbeispiel einer erfindungsgemäßen Vorrichtung 1 zum Herstellen einer Verbindung zwischen einem Kunststoff-Werkstück und einem weiteren Werkstück dargestellt. Die Vorrichtung 1 weist ein Gehäuse 2 auf, das eine zylindrische Form hat. Zentral in dem Gehäuse 2 ist ein Bohrerelement 3 angeordnet, das über einen nicht dargestellten Antrieb sowohl im Uhrzeigersinn als auch entgegen des Uhrzeigersinns rotiert werden kann und das auf seiner Umfangsfläche mit Schneidrippen 4 versehen ist, um in der mit dem Bohrerelement 3 erzeugten Bohrung eine gewindeartige Profilierung herzustellen.

Das Bohrerelement 3 ist von einem ringförmigen,Kolben 5 umgeben der eine Kolbenfläche 6 aufweist, die im Wesentlichen senkrecht zur Längsachse des Bohrerelements 3 verläuft. Schließlich sind das Bohrerelement 3 und der ringförmige Kolben 5 von einem Heizring 7 umgeben, der aufgeheizt werden kann und eine Auflagefläche 8 aufweist, die ebenfalls im Wesentlichen senkrecht zur Längsachse des Bohrerelements 3 verläuft. Damit verlaufen die Kolbenfläche 6 und die Auflagefläche 8 parallel zueinander.

Der zylindrische Kolben 5 kann in Richtung der Längsachse des Bohrerelements 3 zwischen einer in Fig. 1 mit durchgezogenen Linien dargestellten zurückgezogenen Stellung und einer vorgeschobenen Stellung 5' verschoben werden, die in Fig. 1 mit gestrichelten Linien dargestellt ist. In der zurückgezogenen Stellung des Kolbens 5 steht die Kolbenfläche 6 hinter der Auflagefläche 8 des Heizrings 7 zurück, sodass der Heizring 8 eine Ausnehmung umgibt, in die ein Verbindungselement eines Kunststoff-Werkstücks aufgenommen werden kann. In der vorgeschobenen Stellung 5' verläuft die Kolbenfläche 6 in der Ebenen der Auflagefläche 8.

Das Bohrerelement 3 kann ebenfalls in Richtung seiner Längsachse zwischen einer ersten Stellung und einer zweiten Stellung 3' verschoben werden, wobei die zweite Stellung 3' in Fig. 1 ebenfalls gestrichelt dargestellt ist. In der ersten Stellung liegt die Spitze 9 des Bohrerelements in der Ebene der Kolbenfläche 6, wenn der Kolben 5 sich in seiner zurückgezogenen Stellung befindet. Wenn das Bohrerelement 3 in der zweiten Stellung 3' ist, steht die Spitze 9 über die Ebene der Auflagefläche 8 des Heizrings 7 vor und kann somit in ein unterhalb der Auflagefläche 8 angeordnetes Werkstück-Paket eindringen.

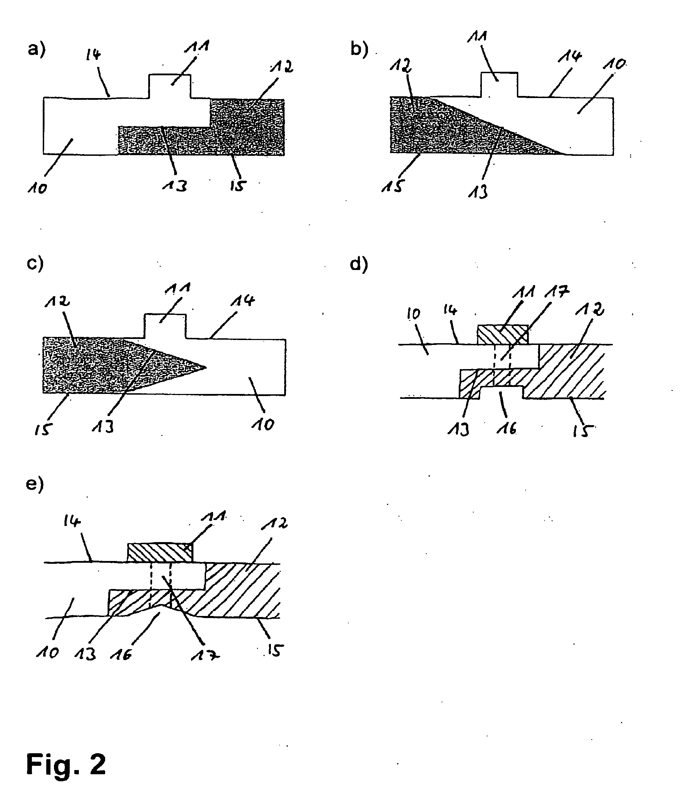

In Fig. 2 sind fünf mögliche Anordnungen zweier Werkstücke dargestellt, die mittels des erfindungsgemäßen Verfahrens verbunden werden können. Bei dem in Teil a) dargestellten Beispiel ist ein Kunststoff-Werkstück 10 mit einem Verbindungselement 11 versehen, das einstückig mit dem Kunststoff-Werkstück 10 ausgebildet ist. Das Kunststoff-Werkstück 10 mit dem Verbindungselement 11 liegt teilweise auf einem weiteren Werkstück 12 auf, das in bevorzugter Weise ein Metall-Werkstück ist. Dabei liegt das Metall-Werkstück 12 derart an einer Oberfläche 13 des Kunststoff-Werkstücks 10 an, dass diese Anlage-Oberfläche 13 der Oberfläche 14 gegenüberliegt, an der das Verbindungselement 11 ausgebildet ist, wobei in diesem bevorzugten Beispiel die Anlage-Oberfläche 13 und die mit dem Verbindungselement 11 versehenen Oberfläche 14 parallel zueinander verlaufen.

Bei dem in Teil b) dargestellten Beispiel einer Verbindungsanordnung ist die Anlage-Oberfläche 13, an der das Metall-Werkstück 12 an dem Kunststoff-Werkstück 10 anliegt, geneigt zu der Oberfläche 14, an der das Verbindungselement 11 ausgebildet ist. Dennoch liegt die Anlage-Oberfläche 13 der Oberfläche 14 des Kunststoff-Werkstücks 10 gegenüber. Diese Verbindungsanordung wird als geschäfftete Verbindung bezeichnet.

Auch bei dem in Teil c) dargestellten Beispiel einer Verbindungsanordnung ist die Anlage-Oberfläche 13, an der das Metall-Werkstück 12 an dem Kunststoff-Werkstück 10 anliegt, so angeordnet, dass sie der Oberfläche 14 mit dem Verbindungselement 11 gegenüberliegt, wobei in diesem Beispiel eine sogenannte "doppelt geschäftete" Verbindung hergestellt werden kann, die neben einem guten Kraftschluss in der Ebene der Oberfläche 14 auch eine sichere Verbindung senkrecht dazu liefert.

Bei dem in Teil d) dargestellten Ausführungsbeispiel ist das Verbindungselement 11 nicht einstückig mit dem Kunststoff-Werkstück 10 ausgebildet, sondern als getrenntes Teil an diesem angeordnet. Somit kann das Verbindungselement 11 separat zugeführt werden und das Kunststoff-Werkstück 10 muss nicht speziell an das erfindungsgemäße Verfahren angepasst werden. Des Weiteren ist an der Oberfläche 15 des Metall-Werkstücks 12, die von dem Kunststoff-Werkstück 10 abgewandt ist, eine Vertiefung 16 vorgesehen, sodass eine später als Durchgangsbohrung ausgeführte Ausnehmung 17 (gestrichelt dargestellt) in dem Bereich, der an die Oberfläche 15 angrenzt, die von dem Kunststoff-Werkstück 10 abgewandt ist, einen gegenüber der restlichen Durchgangsbohrung vergrößerten Durchmesser aufweist.

Das in Teil e) dargestellte Ausführungsbeispiel unterscheidet sich von dem aus Teil d) dadurch, dass die Vertiefung 16 nicht zylindrisch sondern konisch ist. Aber auch in diesem Fall ist der Durchmesser der Durchgangsbohrung in dem Bereich, der an die Oberfläche 15 angrenzt, die von dem Kunststoff-Werkstück 10 abgewandt ist, gegenüber der restlichen Durchgangsbohrung vergrößert.

Bei den in Teil d) und e) gezeigten Ausführungsbeispielen wird durch den Bereich mit vergrößertem Durchmesser, der somit einen Hinterschnitt bildet, erreicht, dass sich ein hoch belastbarer Formschluss in axialer Richtung der Durchgangsbohrung ergibt.

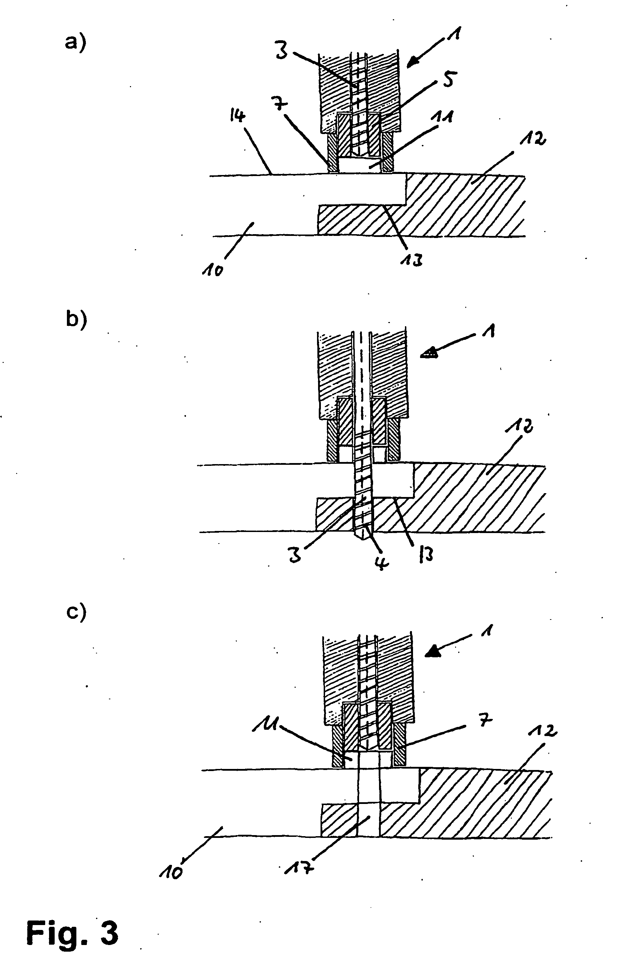

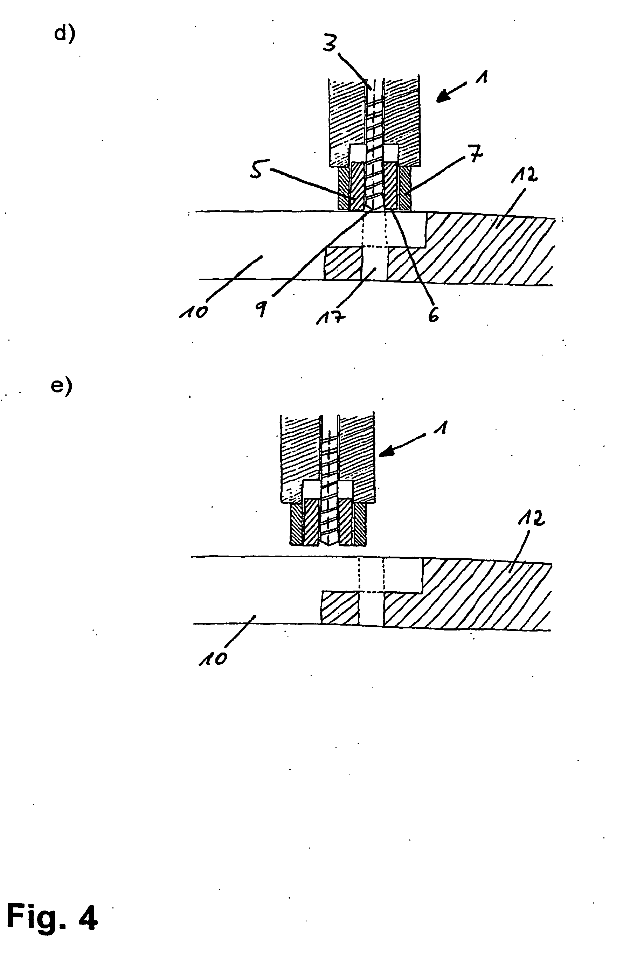

In Fig. 3 und Fig. 4 sind die Schritte a) bis e) einer Ausführungsform des erfindungsgemäßen Verfahrens dargestellt, wobei ein Kunststoff-Werkstück 10 mit einem einstückig ausgebildeten Verbindungselement 11 mit einem weiteren Metall-Werkstück 12 verbunden wird. Dabei ist der Aufbau der Verbindung so gewählt, wie er in Teil a) der Fig. 2 im Detail dargestellt ist. In dieser Ausführungsform ist das Verbindungselement 11 einstückig an dem Kunststoff-Werkstück 10 ausgebildet. Es ist jedoch auch möglich, dass das Verbindungselememt 11 als separates Element bereitgestellt und an dem Kunststoff-Werkstück 10 angeordnet wird.

Das Metall-Werkstück 12 wird derart an das Kunststoff-Werkstück 10 angelegt, dass das Metall-Werkstück 12 an einer Oberfläche 13 des Kunststoff-Werkstücks 10 anliegt, die der Oberfläche 14, an der das Verbindungselement 11 angeordnet ist, gegenüberliegt. Anschließend wird die Vorrichtung 1 gemäß Fig. 1 derart an dem Kunststoff-Werkstück 10 angeordnet, dass das Verbindungselement 11 in der Ausnehmung aufgenommen wird, die von dem Heizring 7 umgeben ist, wenn sich der Kolben 5 in seiner zurückgezogenen Stellung und das Bohrerelement 3 in seiner ersten Stellung befinden (Schritt a)).

Daraufhin wird eine Ausnehmung 17 in das Metall-Werkstück 12 eingebracht, wobei die Ausnehmung 17 sich von der Oberfläche 13 aus erstreckt, an der das Metall-Werkstück 12 an dem Kunststoff-Werkstück 10 anliegt, und als Durchgangsbohrung durch das Kunststoff-Werkstück 10 und das Metall-Werkstück 12 ausgebildet ist. Zum Einbringen der Ausnehmung 17 wird das Bohrerelement 3 in seine zweite Stellung 3' vorgeschoben, wobei das Bohrerelement 3 zusätzlich rotiert wird. Durch die an dem Bohrerelement 3 vorgesehenen Schneidrippen 4 wird dadurch eine gewindeartige Profilierung an der Innenfläche der Ausnehmung 17 geschaffen (Schritt b)).

Anschließend wird das Bohrerelement 3 in seine erste Stellung (siehe Fig. 1) zurückgezogen, wobei das Bohrerelement 3 mit zum Vorschieben entgegengesetztem Drehsinn rotiert wird. Dann wird der Heizring 7 aufgeheizt, bis das Material des Verbindungselements 11 plastifiziert worden ist (Schritt c)).

Sobald das Material des Verbindungselements 11 in einem plastifizierten und damit viskosen Zustand ist, wird das plastifizierte Material in die Ausnehmung 17 des Metall-Werkstücks 12 gepresst. Dazu wird der Kolben 5 der Vorrichtung 1 in seine vorgeschobene Stellung 5' verschoben, wobei das Bohrerelement 3 mit verschoben wird, sodass dessen Spitze 9 dabei in der Ebene der Kolbenfläche 6 verbleibt (Schritt d)).

Nach dem Einpressen des plastifizierten Materials wird der Druck auf das Kunststoff-Werkstück 10 durch den Kolben 5 aufrechterhalten, bis das Kunststoffmaterial abgekühlt und damit verfestigt ist. Durch dieses Aufrechterhalten des Druckes wird erreicht, dass Schrumpfungsprozesse infolge der Erkaltung nicht dazu führen, dass sich Hohlräume in der Ausnehmung 17 bilden können.

Gegebenenfalls kann das Metall-Werkstück 12 auf der von dem Kunststoff-Werkstück 10 abgewandten Oberfläche 15 eine Vertiefung 16 aufweisen, durch die nach dem Einbringen der Ausnehmung 17 ein Hinterschnitt gebildet wird, durch den ein verbesserter Formschluss in axialer Richtung der Ausnehmung 17 erreicht wird (Teil d) und e) in Fig. 2).

Anschließend kann die erfindungsgemäße Vorrichtung 1 von den Werkstücken 10, 12 entfernt werden, wobei nach Ausbilden der Verbindung die Oberfläche des Kunststoff-Werkstücks 10 eben ist, da das Material des Verbindungselements 11 nunmehr in die durch das Bohrerelement 3 gebildete Ausnehmung 17 eingepresst worden ist (Schritt e)).

Vor dem Anlegen des Metall-Werkstücks 12 an das Kunststoff-Werkstück 10 kann in bevorzugter Weise die an dem Kunststoff-Werkstück 10 liegende Oberfläche des Metall-Werkstücks 12 entweder abgeschliffen oder in anderer Weise aufgeraut werden, um zum einen eine möglicherweise vorhandene Oxidschicht zu entfernen und zum anderen eine bessere Adhäsion zwischen den Werkstücken 10, 12 zu erreichen. Außerdem können andere Oberflächenbehandlungen durchgeführt werden, die normalerweise zur Erhöhung der Haftung von Klebeverbindungsoberflächen verwendet werden. Dies können chemisches Ätzen oder Elektronenbestrahlung sein.

Die erfindungsgemäße Vorrichtung 1 sowie das dargestellte erfindungsgemäße Verfahren ermöglichen es in einfacher Weise ohne großen vorrichtungsmäßigen Aufwand, eine formschlüssige Verbindung zwischen einem Kunststoff-Werkstück 10 einerseits und einem weiteren Werkstück 12 andererseits auszubilden. Dazu sind keine Verbindungselemente wie Schrauben oder Nieten erforderlich, sondern es ist ausreichend, an dem Kunststoff-Werkstück 10 ein Verbindungselement 11 anzuordnen, dessen Material später in eine in dem weiteren Werkstück 12 vorgesehenen Ausnehmung 17 eingepresst wird. Da das Material im plastifizierten Zustand in die Ausnehmung 17 eingepresst wird, werden nur geringe Spannungen in dem Material des Kunststoff-Werkstücks 10 erzeugt. Damit weist die so geschaffene Verbindung eine hohe Zuverlässigkeit auf. Außerdem lässt sich das erfindungsgemäße Verfahren leicht, beispielsweise durch Anbringen der Vorrichtung 1 an einem Roboter, automatisieren.

## Patentansprüche

1. Verfahren zum Verbinden eines Kunststoff-Werkstücks (10) mit einem weiteren Werkstück (12) mit den folgenden Schritten:
- Bereitstellen eines Kunststoff-Werkstücks (10) und eines weiteren Werkstücks (12),
- Anlegen des weiteren Werkstücks (12) an das Kunststoff-Werkstück (10),
- Bereitstellen eines Verbindungselements (11) an einer Oberfläche (14) des Kunststoff-Werkstücks (10), die der Oberfläche (13) gegenüberliegt, an der das weitere Werkstück (12) anliegt,
- Einbringen einer Ausnehmung (17) in das weitere Werkstück (12), die an der an dem Kunststoff-Werkstück (10) anliegenden Oberfläche vorgesehen ist,
- wobei die Ausnehmung (17) als eine Bohrung in das weitere Werkstück (12) eingebracht wird und
- wobei die Bohrung durch das Verbindungselement (11) und das Kunststoff-Werkstück (10) in das weitere Werkstück (12) geführt wird,
- Aufheizen des Verbindungselements (11), sodass das Material des Verbindungselements (11) plastifiziert wird, und
- Einpressen von plastifiziertem Material in die Ausnehmung (17).

2. Verfahren nach Anspruch 1, wobei das Bereitstellen des Verbindungselements (11) erfolgt, in dem das Verbindungselement (11) an dem Kunststoff-Werkstück (10) ausgebildet ist.

3. Verfahren nach Anspruch 2, wobei das Verbindungselement (11) einstückig mit dem Kunststoff-Werkstück (10) ausgebildet ist.

4. Verfahren nach Anspruch 1, wobei das Verbindungselement (11) als von dem Kunststoff-Werkstück (10) getrenntes Teil zugeführt wird.

5. Verfahren nach Anspruch 4, wobei das Verbindungselement (11) vor dem Einbringen der Ausnehmung (17) zugeführt wird.

6. Verfahren nach einem der Ansprüche 1 bis 5, wobei ein Druck auf das Material des Kunststoff-Werkstücks (10), das in die Ausnehmung (17) gepresst ist, aufrechterhalten wird, bis das Material des Kunststoff-Werkstücks (10) abgekühlt ist.

7. Verfahren nach einem der Ansprüche 1 bis 6, wobei das weitere Werkstück (12) aus einem Metall ist.

8. Verfahren nach einem der Ansprüche 1 bis 7, wobei die Bohrung als Gewindebohrung ausgebildet ist.

9. Verfahren nach einem der Ansprüche 1 bis 8, wobei die Bohrung als Durchgangsbohrung durch das weitere Werkstück (12) ausgebildet ist.

10. Verfahren nach Anspruch 9, wobei der Bereich der Durchgangsbohrung, der an die Oberfläche (15) angrenzt, die von dem Kunststoff-Werkstück (10) abgewandt ist, einen gegenüber der restlichen Durchgangsbohrung vergrößerten Durchmesser aufweist.

11. Verfahren nach einem der Ansprüche 1 bis 10, wobei die an dem Kunststoff-Werkstück (10) anliegende Oberfläche des weiteren Werkstücks (12) aufgeraut wird.

12. Verfahren nach einem der Ansprüche 1 bis 10, wobei die an dem Kunststoff-Werkstück (10) anliegende Oberfläche des weiteren Werkstücks (12) abgeschliffen wird.

13. Vorrichtung zur Durchführung des Verfahrens nach einem der Ansprüche 1 bis 12,
mit einem Bohrerelement (3),
mit einem ringförmigen Kolben (5), der das Bohrerelement (3) umgibt und der eine Kolbenfläche (6) aufweist, und
mit einem Heizring (7), der den Kolben umgibt und der eine ringförmige Auflagefläche (8) aufweist,
wobei der Heizring (7) beheizbar ist,
wobei der Kolben (5) in axialer Richtung des Bohrerelements (3) zwischen einer zurückgezogenen Stellung, in der die Kolbenfläche (6) hinter der Auflagefläche (8) zurücksteht, und einer vorgeschobenen Stellung verschiebbar ist, in der die Kolbenfläche (6) in der Ebene der Auflagefläche (8) verläuft, und
wobei das Bohrerelement (3) in seiner axialen Richtung zwischen einer ersten Stellung, in der die Spitze (9) des Bohrerelements (3) in der Ebene der Kolbenfläche (6) angeordnet ist, wenn der Kolben (5) in der zurückgezogenen Stellung ist, und einer zweiten Stellung verschiebbar ist, in der die Spitze (9) des Bohrerelements über die Ebene der Auflagefläche (8) vorsteht.

14. Vorrichtung nach Anspruch 13, wobei das Bohrerelement (3) mit zwei Drehrichtungen rotierbar ist.

15. Vorrichtung nach Anspruch 14, wobei das Bohrerelement (3) ausgestaltet ist, in der damit erzeugen Bohrung eine gewindeartige Profilierung herzustellen.

## Claims

1. Method of connecting a plastic workpiece (10) to a further workpiece (12), comprising the following steps:
- providing a plastic workpiece (10) and a further workpiece (12),
- placing the further workpiece (12) against the plastic workpiece (10),
- providing a connecting element (11) on a surface (14) of the plastic workpiece (10), this surface (14) being opposite the surface (13) against which the further workpiece (12) bears,
- producing a recess (17) in the further workpiece (12), this recess (17) being provided on the surface bearing against the plastic workpiece (10),
- the recess (17) being incorporated in the further workpiece (12) in the form of a bore,
- the bore being conducted through the connecting element (11) and the plastic workpiece (10) to the further workpiece (12),
- heating the connecting element (11) so that the material of the connecting element (11) is plasticized, and
- pressing plasticized material into the recess (17).

2. Method according to claim 1, wherein the connecting element (11) is provided by the connecting element (11) being formed on the plastic workpiece (10).

3. Method according to claim 2, wherein the connecting element (11) is formed in one piece with the plastic workpiece (10).

4. Method according to claim 1, wherein the connecting element (11) is supplied as a part separate from the plastic workpiece (10).

5. Method according to claim 4, wherein the connecting element (11) is supplied before the recess (17) is incorporated.

6. Method according to one of claims 1 to 5, wherein a pressure on the material of the plastic workpiece (10) which is pressed into the recess (17) is maintained until the material of the plastic workpiece (10) has cooled.

7. Method according to one of claims 1 to 6, wherein the further workpiece (12) is made of metal.

8. Method according to one of claims 1 to 7, wherein the bore is formed as a threaded bore.

9. Method according to one of claims 1 to 8, wherein the bore is formed as a through-bore through the further workpiece (12).

10. Method according to claim 9, wherein that region of the through-bore which adjoins the surface (15) which faces away from the plastic workpiece (10) has an enlarged diameter relative to the rest of the through-bore.

11. Method according to one of claims 1 to 10, wherein that surface of the further workpiece (12) which adjoins the plastic workpiece (10) is roughened.

12. Method according to one of claims 1 to 10, wherein that surface of the further workpiece (12) which adjoins the plastic workpiece (10) is ground.

13. Device for carrying out the method according to one of claims 1 to 12,
having a drilling element (3),
having an annular piston (5) which surrounds the drilling element (3) and which has a piston surface (6), and
having a heating ring (7) which surrounds the piston and which has an annular locating surface (8),
the heating ring (7) being heatable,
the piston (5) being displaceable in the axial direction of the drilling element (3) between a retracted position, in which the piston surface (6) is set back behind the locating surface (8), and an advanced position in which the piston surface (6) runs in the plane of the locating surface (8), and
the drilling element (3) being displaceable in its axial direction between a first position, in which the tip (9) of the drilling element (3) is arranged in the plane of the piston surface (6) when the piston (5) is in the retracted position, and a second position, in which the tip (9) of the drilling element projects beyond the plane of the locating surface (8).

14. Device according to claim 13, the drilling element (3) being rotatable in two directions of rotation.

15. Device according to claim 14, the drilling element (3) being designed to produce thread-like profiling in the bore produced by it.

## Revendications

1. Procédé permettant d'assembler une pièce à usiner en matière plastique (10) à une autre pièce à usiner (12), comprenant les étapes suivantes :
- mettre à disposition une pièce à usiner en matière plastique (10) et une autre pièce à usine (12),
- poser l'autre pièce à usiner (12) sur la pièce à usiner en matière plastique (10),
- mettre à disposition un élément d'assemblage (11) au niveau d'une surface (14) de la pièce à usiner en matière plastique (10), laquelle se situe en regard de la surface (13) au niveau de laquelle repose l'autre pièce à usiner (12),
- pratiquer un évidement (17) dans l'autre pièce à usiner (12), qui est prévu au niveau de la surface reposant sur la pièce à usiner en matière plastique (10),
- sachant que l'évidement (17) est pratiqué sous la forme d'un alésage dans l'autre pièce à usiner (12) et
- sachant que l'alésage est guidé par l'élément d'assemblage (11) et la pièce à usiner en matière plastique (10) dans l'autre pièce à usiner (12),
- chauffer l'élément d'assemblage (11) de sorte que le matériau de l'élément d'assemblage (11) se plastifie, et
- enfoncer le matériau plastifié à l'intérieur de l'évidement (17).

2. Procédé selon la revendication 1, dans lequel la mise à disposition de l'élément d'assemblage (11) s'effectue en ce que l'élément d'assemblage (11) est réalisé au niveau de la pièce à usiner en matière plastique (10).

3. Procédé selon la revendication 2, dans lequel l'élément d'assemblage (11) est réalisé d'un seul tenant avec la pièce à usiner en matière plastique (10).

4. Procédé selon la revendication 1, dans lequel l'élément d'assemblage (11) est amené sous la forme d'une partie séparée de la pièce à usiner en matière plastique (10).

5. Procédé selon la revendication 4, dans lequel l'élément d'assemblage (11) est amené avant que l'évidement (17) ne soit pratiqué.

6. Procédé selon l'une quelconque des revendications 1 à 5, sachant qu'une pression sur le matériau de la pièce à usiner en matière plastique (10), lequel est pressé dans l'évidement (17), est maintenue jusqu'à ce que le matériau de la pièce à usiner en matière plastique (10) se refroidisse.

7. Procédé selon l'une quelconque des revendications 1 à 6, dans lequel l'autre pièce à usiner (12) est en métal.

8. Procédé selon l'une quelconque des revendications 1 à 7, dans lequel l'alésage se présente sous la forme d'un alésage fileté.

9. Procédé selon l'une quelconque des revendications 1 à 8, dans lequel l'alésage est réalisé sous forme d'un alésage de passage à travers l'autre pièce à usiner (12).

10. Procédé selon la revendication 9, dans lequel la zone de l'alésage de passage, qui est contiguë à la surface (15), qui est opposée à la pièce à usiner en matière plastique (10), présente un diamètre agrandi par rapport au reste de l'alésage de passage.

11. Procédé selon l'une quelconque des revendications 1 à 10, dans lequel la surface, reposant sur la pièce à usiner en matière plastique (10), de l'autre pièce à usiner (12) est rendue rugueuse.

12. Procédé selon l'une quelconque des revendications 1 à 10, dans lequel la surface, reposant au niveau de la pièce à usiner en matière plastique (10), de l'autre pièce à usiner (12) est poncée.

13. Dispositif servant à mettre en oeuvre le procédé selon l'une quelconque des revendications 1 à 12,
comprenant un élément de perforation (3),
comprenant un piston (5) annulaire, qui entoure l'élément de perforation (3) et qui présente une surface de piston (6),
comprenant une bague chauffante (7) qui entoure le piston et qui présente une surface d'appui (8) annulaire,
dans lequel la bague chauffante (7) peut être chauffée,
dans lequel le piston (5) peut être déplacé par coulissement dans la direction axiale de l'élément de perforation (3) entre une position en retrait, dans laquelle la surface de piston (6) se trouve en retrait derrière la surface d'appui (8), et une position de mise en avant, dans laquelle la surface de piston (6) s'étend dans le plan de la surface d'appui (8),
dans lequel l'élément de perforation (3) peut être déplacé par coulissement dans sa direction axiale entre une première position, dans laquelle la pointe (9) de l'élément de perforation (3) est disposée dans le plan de la surface de piston (6), lorsque le piston (5) se trouve dans la position en retrait, et une deuxième position, dans laquelle la pointe (9) de l'élément de perforation dépasse du plan de la surface d'appui (8).

14. Dispositif selon la revendication 13, dans lequel l'élément de perforation (3) peut être tourné dans deux directions de rotation.

15. Dispositif selon la revendication 14, dans lequel l'élément de perforation (3) est configuré pour fabriquer dans l'alésage ainsi obtenu un profilage à la manière d'un filetage.
